# EUROPÄISCHE PATENTSCHRIFT

(11) **EP 3 123 574 B1**
(45) Veröffentlichungstag und Bekanntmachung des Hinweises auf die Patenterteilung: **14.11.2018**
(21) Anmeldenummer: 15705485.9
(22) Anmeldetag: 02.02.2015
(51) Int. Cl.: B65D 85/24, F16B 15/08, F16B 27/00, H01R 43/16

(54) **GURTBAND FÜR KONTAKTELEMENTE**
BELT STRIP FOR CONTACT ELEMENTS
SANGLE POUR ÉLÉMENTS DE CONTACT

(30) Priorität: 28.03.2014 DE 102014104406
(43) Veröffentlichungstag der Anmeldung: 01.02.2017
(73) Patentinhaber: Harting Electric GmbH & Co. KG, 32339 Espelkamp (DE)
(72) Erfinder: GARSKE, Stefan, 49152 Bad Essen (DE); TROST, Mario, 31812 Bad Pyrmont (DE); SCHMIDT, Martin, 32312 Lübbecke (DE); DEGNER, Gero, 32427 Minden (DE)
(86) Internationale Anmeldenummer: PCT/DE2015/100044
(87) Internationale Veröffentlichungsnummer: WO 2015/144126

(56) Entgegenhaltungen:
- EP-A1- 0 847 112
- EP-A2- 0 501 392
- WO-A1-98/40937

## Beschreibung

Die Erfindung geht aus von einen Gurtband für Kontaktelemente nach dem Oberbegriff des unabhängigen Anspruchs 1.

Derartige Gurtbänder werden eingesetzt, um die Kontaktelemente automatisiert zu verarbeiten. Beispielsweise können derartige Gurtbänder in so genannten Bestückungsmaschinen eingesetzt werden. In diesen Bestückungsmaschinen werden Isolierkörper von Steckverbindern automatisiert mit Kontaktelementen bestückt. Über die Gurtbänder werden die Kontaktelemente zum entsprechenden Arbeitsbereich der Maschine gefördert.

### Stand der Technik

Die EP 0 501 392 A2 zeigt ein Gurtband für Kontaktelemente. Das Gurtband hat eine bandförmig Grundform von der jeweils zwei gegenüberliegenden Laschen um etwa 90° abgewinkelt sind. Die Laschen weisen jeweils kreisrunde Ausnehmungen auf, in der die Kontaktelemente verliersicher festgeklemmt werden.

Bei der EP 0 501 392 A2 sind die Kontaktelemente kraftbeziehungsweise reibschlüssig in den Ausnehmungen gehalten. Beim automatisierten Herausnehmen der Kontaktelemente kann die Oberfläche der Kontaktelemente leicht abgerieben werden. Das ist insbesondere bei goldbeschichteten Kontaktelementen von Nachteil. Die Oberflächenbeschichtung von Kontaktelementen wird aufgrund der hohen Rohstoffpreise immer dünner. Bereist leichter Abrieb der Oberfläche kann daher zu großen Verlusten in der Stromtragfähigkeit des Kontaktelements führen.

EP 0 501 392 A2 offenbart den Oberbegriff des unabhängigen Anspruchs 1.

### Aufgabenstellung

Die Aufgabe der Erfindung besteht darin, ein Gurtband für Kontaktelemente vorzuschlagen, welches ein einfaches maschinelles und schadfreies Verarbeiten der Kontaktelemente ermöglicht.

Die Aufgabe wird durch die kennzeichnenden Merkmale des unabhängigen Anspruchs 1 gelöst.

Vorteilhafte Ausgestaltungen der Erfindung sind in den Unteransprüchen angegeben.

Der hier vorgeschlagene Gurt ist zur Halterung von elektrischen Kontaktelementen vorgesehen und wird in so genannten Bestückungsmaschinen eingesetzt.

Der Gurt besteht im Wesentlichen aus einem flachen Metallband. Von der bandförmigen Grundform des Metallbands sind einzelne Laschen um etwa 90° abgewinkelt.

Im Folgenden werden die Begriffe "Gurt" und "Gurtband" synonym verwendet.

Die Laschen weisen eine eingestanzte Ausnehmung auf, die jeweils zwei zueinander hingebogene Haltearme ausbildet. Diese Haltearme weisen eine gleichbleibende Krümmungsrichtung auf. Das bedeutet, dass die Haltearme in ihrer gesamten Erstreckung nur eine positive oder eine negative Krümmung aufweisen. Da die Haltearme zueinander hingebogen sind, bildet jede Lasche einen positiv und einen negativ gekrümmten Haltearm aus. Bekanntermaßen bildet eine positive Krümmung eine Linkskurve und entsprechend eine negative Krümmung eine Rechtskurve aus.

Zu ihren freien Enden hin wird der Krümmungsradius der jeweiligen Haltearme größer. Das bedeutet, dass die Krümmung oder Biegung zu den Enden hin abnimmt.

Vorteilhafterweise sind zwei vom Grundkörper des Metallbandes abgewinkelte Laschen gegenüberliegend angeordnet. Diese Laschen bilden zusammen ein Laschenpaar. Durch ein solches Laschenpaar können die einzelnen Kontaktelemente optimal axial ausgerichtet transportiert werden.

Vorteilhafterweise weist das flache Metallband mehrere hintereinander angeordnete Ausnehmungen auf, wobei die Ausnehmungen zwischen den Laschenpaaren angeordnet sind. Diese Ausnehmungen sind in der Regel kreisrund und dienen zum Transport des Gurtes in der Bestückungsmaschine.

Im Folgenden wird ein vorteilhaftes Verfahren beschrieben durch das ein Gurt, vorteilhafterweise der oben beschriebene, mit Kontaktelementen bestückt werden kann.

Zunächst werden die Kontaktelemente zwischen die jeweiligen gebogenen Haltearme eines Laschenpaares gelegt. Dies kann entweder durch seitliches Einlegen oder durch ein Einführen von Oben geschehen.

Anschließend werden die Haltearme durch einen Stempel weiter in ihrer ursprünglichen Biegerichtung eingebogen, bis das Kontaktelement von den Haltearmen kraftlos bzw. reiblos umschlossen wird. In diesem Fall umgreifen die Haltearme das Kontaktelement in Umfangsrichtung, ohne kraft- oder reibschlüssig mit der Mantelfläche des Kontaktelements verbunden zu sein. Das Kontaktelement liegt lediglich, durch die Schwerkraft bedingt, auf den Haltarmen auf. Der Durchmesser, den die umgreifenden Haltearme bilden, ist geringfügig größer als der Durchmesser des Kontaktelements an der umgriffenden Stelle.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines noch unfertigen Gurtes,
- Fig. 2: eine perspektivische Darstellung des Gurtes mit eingebrachten Kontaktelementen und
- Fig. 3: eine schematische Darstellung eines Umformungsprozesses eines Haltearms des Gurtes.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

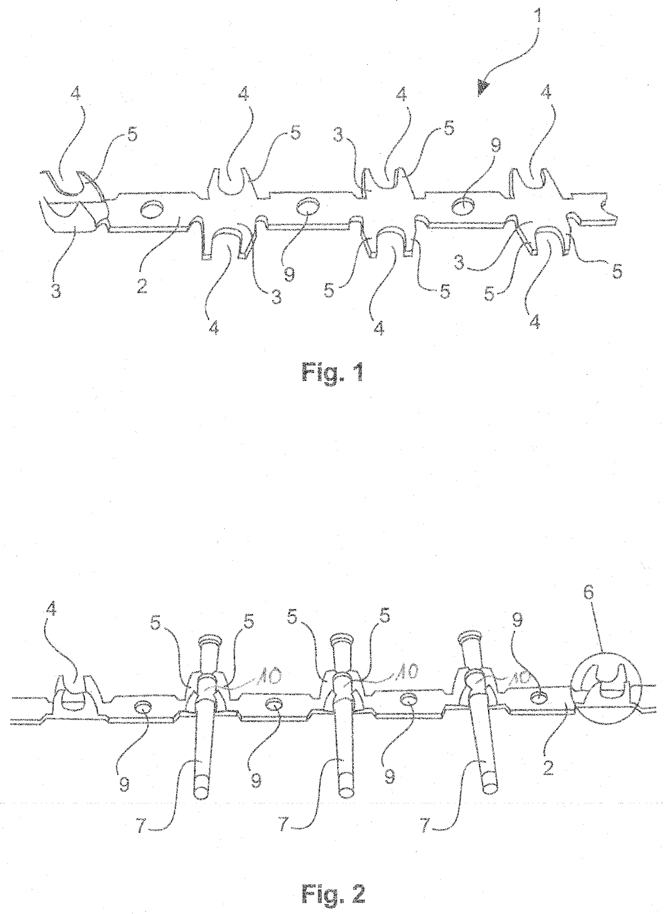

Die Figur 1 zeigt einen noch unfertigen Gurt 1. Der Gurt 1 besteht im Wesentlichen aus einem flachen Metallband 2 von dem einzelne Laschen 3 abstehen. Aus den Laschen 3 wird eine ovale Ausnehmung 4 ausgestanzt. Durch die Ausstanzung entstehen jeweils zwei Haltearme 5. Aus Übersichtlichkeitsgründen wird in Figur 1 nicht jeder Haltearm 5 mit einem Bezugszeichen versehen.

Die Laschen 3 werden senkrecht (etwa um 90°) vom Grundkörper des Metallbandes 2 weggefaltet. Dadurch stehen jeweils zwei Laschen 3 parallel zueinander und bilden ein so genanntes Laschenpaar 6.

In das Laschenpaar 6 werden Kontaktelemente 7 eingelegt. Dies kann entweder parallel zur Ausrichtung der Haltearme 5, also seitlich, oder senkrecht zu den Haltearmen 5, also von oben, passieren.

Das flache Metallband 2 weist mehrere hintereinander angeordnete Ausnehmungen 9 auf. Damit kann der Gurt 1 in einer Bestückungsmaschine vorwärtsgetrieben werden.

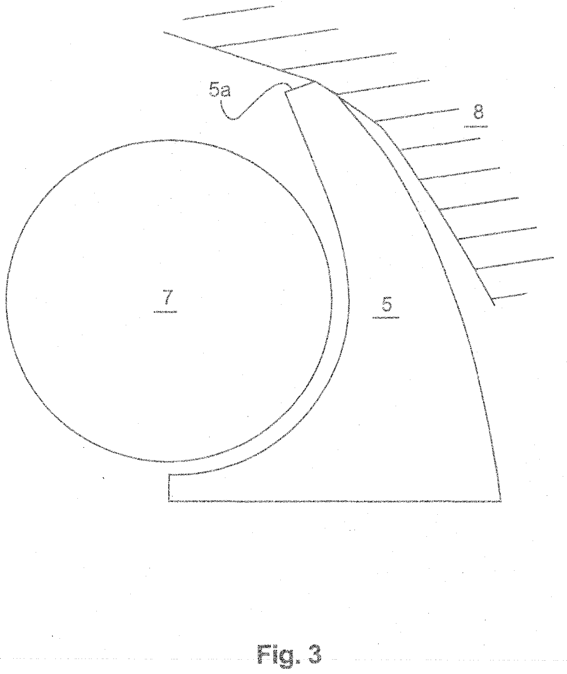

In Figur 3 ist die schematische Darstellung eines einzelnen Haltearms 5 zu sehen. Es ist deutlich zu erkennen, dass der Haltearm 5 eine gleichbleibende Krümmungsrichtung aufweist. In diesem Fall ist der Haltearm 5 nach links gebogen. In Richtung des Endes 5a des Haltearms 5 nimmt der Krümmungsradius zu, die Biegung wird demnach weniger.

In Figur 3 ist ein Schnitt eines Kontaktelementes 7 und eines Stempelwerkzeuges 8 zu sehen. Der Schnitt des Kontaktelements 7 hat eine etwa kreisrunde Form. Das Stempelwerkzeug drückt das Ende 5a des Haltearms 5 weiter in seine ursprüngliche Biegerichtung.

Das Kontaktelement 7 weist im oberen Drittel eine radial abstehende und umlaufende Verdickung 10 auf. Durch das Stempelwerkzeug 8 wird das Ende 5a des Haltearms 5 in Richtung des Kontaktelementes 5 gebogen. Dadurch wird das das Kontaktelement 7 von den Haltearmen 5 kraftlos bzw. reiblos umschlossen. Das Kontaktelement 7 ist weiterhin drehbar von den Haltearmen 5 umschlossen. Das Kontaktelement 7 liegt durch die radial abstehende Verdickung auf den Haltearmen 5 auf. Dadurch wird das Kontaktelement 7 verliersicher gehalten und kann maschinell verarbeitet werden.

Die Oberflächenbeschichtung derart verarbeiteter Kontaktelemente 7 bleibt unbeschädigt, was die Qualität der fertigen Steckverbinder erhöht.

### Gurtband für Kontaktelemente

### Bezugszeichenliste

- 1: Gurtband
- 2: Flaches Metallband
- 3: Lasche
- 4: Ovale Ausnehmung
- 5: Haltearm
5a Ende des Haltearms
- 6: Laschenpaar
- 7: Kontaktelement
- 8: Stempelwerkzeug
- 9: Ausnehmung
- 10: Verdickung

## Patentansprüche

1. Gurtband (1) für Kontaktelemente (7),
• welches im Wesentlichen aus einem flachen Metallband (2) besteht,
• von welchem einzelne Laschen (3) um etwa 90° abgewinkelt sind,
• wobei zwei Laschen (3) gegenüberliegend angeordnet sind und zusammen ein Laschenpaar (6) bilden.
• wobei die Laschen (3) jeweils zwei zueinander hin gebogenen Haltearme (5) aufweisen und
• wobei die Haltearme (5) jeweils eine gleichbleibende Krümmungsrichtung aufweisen und
**dadurch gekennzeichnet,**
• **dass** der Krümmungsradius in Richtung der Enden (5a) der jeweiligen Haltearme (5) zunimmt.

2. Gurtband für Kontaktelemente nach vorstehendem Anspruch **dadurch gekennzeichnet, dass**
• das flache Metallband (2) mehrere hintereinander angeordnete Ausnehmungen (9) aufweist,
• die zwischen den Laschenpaaren (6) angeordnet sind.

3. Gurtband (1) gemäß einem der vorstehenden Ansprüche, welches zumindest ein Kontaktelement (7) aufweist.

4. Gurtband (1) nach vorstehendem Anspruch
**dadurch gekennzeichnet, dass**
das Kontaktelement (7) eine radial abstehende und umlaufende Verdickung (10) aufweist.

## Claims

1. Belt strip (1) for contact elements (7),
• which consists fundamentally of a flat metal strip (2),
• from which individual tabs (3) are bent at approximately 90°,
• wherein two tabs (3) are arranged opposite one another and together form a tab pair (6),
• wherein the tabs (3) each have two retaining arms (5) curved toward one another, and
• wherein the retaining arms (5) each have a constant direction of curvature, and
• in that the radius of curvature increases in the direction of the ends (5a) of the corresponding retaining arms (5).

2. Belt strip for contact elements according to the preceding claim, **characterized in that**
• the flat metal strip (2) has a plurality of recesses (9) arranged in succession,
• which recesses are arranged between the tab pairs (6).

3. Belt strip (1) according to either one of the preceding claims, which has at least one contact element (7).

4. Belt strip (1) according to the preceding claim, **characterized in that**
the contact element (7) has a radially protruding and peripheral thickened portion (10).

## Revendications

1. Sangle (1) pour éléments de contact (7),
- qui se compose essentiellement d'une bande métallique plate (2),
- depuis laquelle des pattes individuelles (3) s'étendent à un angle d'environ 90°,
- deux pattes (3) étant disposées en regard l'une de l'autre et formant ensemble une paire de pattes (6),
- les pattes (3) présentant chacune deux bras de retenue (5) courbés l'un vers l'autre et
- les bras de retenue (5) présentant chacun une direction de courbure constante et
**caractérisée en ce que**
- le rayon de courbure augmente dans la direction des extrémités (5a) des bras de retenue respectifs (5).

2. Sangle pour éléments de contact selon la revendication précédente,
**caractérisée en ce que**
- la bande métallique plate (2) présente plusieurs évidements (9) disposés les uns derrière les autres,
- qui sont disposés entre les paires de pattes (6) .

3. Sangle (1) selon l'une quelconque des revendications précédentes, qui présente au moins un élément de contact (7).

4. Sangle (1) selon la revendication précédente,
**caractérisée en ce que** l'élément de contact (7) présente un épaississement (10) saillant radialement et périphérique.
